(19) Europäisches Patentamt
European Patent Office
Office européen des brevets

(11) Veröffentlichungsnummer: **0 060 476**
**B1**

(12) # EUROPÄISCHE PATENTSCHRIFT

(45) Veröffentlichungstag der Patentschrift: **11.09.85**

(51) Int. Cl.⁴: **C 07 C 125/06**

(21) Anmeldenummer: **82101808.2**

(22) Anmeldetag: **08.03.82**

(54) **Verfahren zur Herstellung von N- substituierten Di- und/oder Polyurethanen.**

(30) Priorität: **18.03.81 DE 3110573**

(43) Veröffentlichungstag der Anmeldung: **22.09.82 Patentblatt 82/38**

(45) Bekanntmachung des Hinweises auf die Patenterteilung: **11.09.85 Patentblatt 85/37**

(84) Benannte Vertragsstaaten: **BE DE FR GB IT NL**

(56) Entgegenhaltungen: **EP - A - 0 018 581**

(73) Patentinhaber: **BAYER AG, Konzernverwaltung RP Patentabteilung, D-5090 Leverkusen 1 Bayerwerk (DE)**

(72) Erfinder: **Knöfel, Hartmut, Dr., Dülmener Weg 21, D-5068 Odenthal (DE)**
Erfinder: **Penninger, Stefan, Dr., Pommernallee 5, D-4047 Dormagen (DE)**
Erfinder: **Hammen, Günther, Dr., Goethestrasse 67, D-4047 Dormagen (DE)**
Erfinder: **Heitkämper, Peter, Dr., Fliederweg 14, D-4047 Dormagen (DE)**

EP 0 060 476 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft ein Verfahren zur Herstellung von N-substituierten, niedermolekularen aliphatischen oder aromatischen Di- und/oder Polyurethanen durch Umsetzung von primären Di- und/oder Polyaminen mit N-Arylurethanen in Gegenwart von hochsiedenden Alkoholen.

Die phosgenfreie Herstellung von Urethanen und deren anschließende thermische Spaltung unter Bildung der entsprechenden Isocyanate stellt eine interessante Alternative zur Herstellung von Isocyanaten durch Phosgenierung der ihnen zugrundeliegenden Amine dar. Während die phosgenfreie Herstellung von Monourethanen, die am Stickstoff aromatisch und am Sauerstoff aliphatisch substituiert sind, beispielsweise von N-Phenyl-O-ethyl-urethan nach verschiedenen Methoden bereits in guten Ausbeuten gelingt, sind die bislang bekannt gewordenen Verfahren zur Herstellung von niedermolekularen Di- und/oder Polyurethanen, die am Stickstoff aliphatisch oder aromatisch und am Sauerstoff aliphatisch substituiert sind noch mit schwerwiegenden Nachteilen behaftet. Andererseits stellen gerade derartige Di- und/oder Polyurethane die technisch eigentlich interessanten Zwischenprodukte dar, da nur aus ihnen die in der Polyurethanchemie einsetzbaren Di- und/oder Polyisocyanate zugänglich sind.

So ist beispielsweise das Verfahren der DE-OS 2 917 569 zur Herstellung von aromatischen Di- und/oder Polyurethanen aus den entsprechenden Aminen, Harnstoff und Alkohol mit dem Nachteil behaftet, daß Harnstoff und Alkohol in großem Überschuß eingesetzt werden, so daß ein Großteil des Harnstoffs zum Alkylcarbamat abreagiert. Harnstoff und N-unsubstituierte Carbamate neigen jedoch bei höheren Temperaturen zur Zersetzung, so daß als weitere Nebenprodukte auch nicht flüchtige Verbindungen wie z. B. Cyanursäure, Biuret, Cyanursäuretriureid, Amelid und Cyamelid entstehen, deren Abtrennung aus dem Reaktionsprodukt mit großen Schwierigkeiten verbunden ist. Außerdem ist Harnstoff bei hohen Temperaturen flüchtig und lagert sich an kühlen Teilen der Apparatur als Feststoff ab. Dies kann zur Verstopfung von Leitungen bzw. Kühlern führen.

Das entsprechende Verfahren zur Herstellung von aliphatischen Di- und/oder Polyurethanen der DE-OS 2 917 493 ist seinerseits mit dem Nachteil behaftet, daß beträchtliche Mengen an Polyharnstoff als Nebenprodukt entstehen. Diese Bildung von Polyharnstoff ist nicht zu verhindern, da aliphatische und cycloaliphatische Di- und/oder Polyamine, bedingt durch ihre höhere Nukleophile, wesentlich schneller mit Harnstoff reagieren als der konkurrierende Alkohol. Polyharnstoff reagiert aber nur langsam mit Alkohol unter Bildung von Urethan- und Amingruppen, was zu unerwünschten langen Reaktionszeiten führt.

Die Verfahren der EP-OS 18 581, EP-OS 18 583, DE-OS 2 917 490 bzw. DE-OS 2 917 568 zur Herstellung von aliphatischen bzw. aromatischen Di- und/oder Polyurethanen unter Verwendung von N-unsubstituierten Carbamidsäureestern als »Carbonyl-Quelle« sind ihrerseits mit dem Nachteil behaftet, daß das Carbamat in großem Überschuß eingesetzt bzw. noch zusätzlich Harnstoff zugegeben werden muß, die beispielhaft beschriebenen Reaktionszeiten sehr hoch sind und die Ausbeuten an Verfahrensprodukt noch stark verbesserungswürdig sind. Diese vergleichsweise schlechten Ausbeuten sind auch hier auf eine unerwünschte Bildung von Nebenprodukten, insbesondere von Polyharnstoffen zurückzuführen.

Es war daher die der Erfindung zugrundeliegende Aufgabe, ein neues Verfahren zur Verfügung zu stellen, welches die Herstellung von niedermolekularen Di- und/oder Polyurethanen, die vorzugsweise am Stickstoff aliphatisch oder aromatisch und am Sauerstoff aliphatisch substituiert sind, zur Verfügung zu stellen, welches nicht mit den Nachteilen der Verfahren des Standes der Technik behaftet ist.

Diese Aufgabe konnte überraschenderweise durch das nachstehend näher beschriebene erfindungsgemäße Verfahren gelöst werden, bei welchem man Di- und/oder Polyamine in Gegenwart von hochsiedenden Alkoholen mit N-Arylurethanen unter Abspaltung von Arylamin zur Reaktion bringt. Die mit dem erfindungsgemäßen Verfahren erreichten Vorteile insbesondere gegenüber den Verfahren der DE-OS 2 917 490 und der DE-OS 2 917 568 sind überraschend, da beim erfindungsgemäßen Verfahren kein gasförmiges Ammoniak, sondern vergleichsweise schwer flüchtiges Arylamin entsteht, welches aus dem Reaktionsgemisch entfernt werden muß, und dennoch ein praktisch vollständiger Umsatz des eingesetzten Di und/oder Polyamins unter praktisch ausschließlicher Bildung der angestrebten Verfahrensprodukte innerhalb vergleichsweise kurzer Reaktionszeiten möglich ist.

Gegenstand der Erfindung ist ein Verfahren zur Herstellung von Urethangruppen aufweisenden Verbindungen der allgemeinen Formel

$$R^1(-NHCOOR^2)_n$$

in welcher

$R^1$ für einen gesättigten, unsubstituierten aliphatischen Kohlenwasserstoffrest mit 4 bis 12 Kohlenstoffatomen, einen gesättigten, gegebenenfalls Alkyl-substituierten und/oder Methylenbrücken aufweisenden cycloaliphatischen Kohlenwasserstoffrest mit insgesamt 6 bis 25 Kohlenstoffatomen oder einen gegebenenfalls Alkyl-substituierten und/oder Methylenbrücken aufweisenden aromatischen Kohlenwasserstoffrest mit insgesamt 6 bis 25 Kohlenstoffatomen steht,

$R^2$ für einen gegebenenfalls inerte Substituenten und/oder Ethergruppen aufweisenden aliphatischen Kohlenwasserstoffrest mit insgesamt 6 bis 18 Kohlenstoffatomen, einen gegebenenfalls inerte Substituenten aufweisenden cycloaliphatischen Kohlenwasserstoffrest mit insgesamt 8 bis 15 Kohlenstoffatomen oder einen gegebenenfalls inerte Substituenten aufweisenden araliphatischen Kohlenwasserstoffrest mit insgesamt 7 bis 18 Kohlenstoffatomen steht, und

n für 2 oder 3 steht,

dadurch gekennzeichnet, daß man a) Di- und/oder Polyamine der Formel

$$R^1(NH_2)_n$$

in Gegenwart mindestens eines hochsiedenden Alkohols b) der Formel

$$R^2-OH,$$

der unter Normaldruck einen Siedepunkt von mindestens 190° C aufweist, mit c) N-Arylurethanen der Formel

$$R^3-NHCOO-R^4$$

bei erhöhter Temperatur zur Reaktion bringt und das sich spontan bildende, dem N-Arylurethan entsprechende Arylamin kontinuierlich durch Destillation aus dem Reaktionsgemisch entfernt, wobei

$R^3$ für einen Phenyl- oder Tolylrest steht und

$R^4$ für einen Rest steht, der bezüglich seiner Bedeutung der Definition von $R^2$ entspricht jedoch nicht zwingend gleich $R^2$ ist.

Ausgangsmaterialien des erfindungsgemäßen Verfahrens sind a) organische Di- und Polyamine mit primären Aminogruppen, b) hochsiedende Alkohole mit primären oder sekundären Hydroxylgruppen und c) N-Arylurethanen ne.

Geeignete Di- und/oder Polyamine a) sind beliebige organische Verbindungen, die mindestens 2 primäre Aminogruppen aufweisen und ansonsten unter den Reaktionsbedingungen des erfindungsgemäßen Verfahrens inert sind. Gut geeignet sind beispielsweise Di- und/oder Polyamine der Formel

$$R^1(NH_2)_n$$

in welcher

$R^1$ und n die bereits genannte Bedeutung haben.

Beispiele geeigneter Di- und/oder Polyamine sind

Tetramethylendiamin, Hexamethylendiamin, 2,2,4-Trimethylhexamethylendiamin,
Isophorondiamin, 1,4-Diaminocyclohexan, 4,4'-Diamino-dicyclohexylmethan,
2,4-, 2,6-Diamino-1-methylcyclohexan, 4,4'-Diamino-3,3'-dimethyldicyclohexylmethan,
4-Aminocyclohexyl-4-aminophenylmethan, 1,3- und 1,4-Diaminobenzol,
2-Chlor-1,4-diaminobenzol, 2,4- und 2,6-Diaminotoluol,
1,3-Bis-(aminomethyl)-4,6-dimethylbenzol, 1,3-Diamino-2,6-diethyl-4-methylbenzol,
1,3-Diamino-2,4,6-triisopropylbenzol, 1,5-Diaminonaphthalin, 2,7-Diaminonaphthalin,
Benzidin, 3,3'-Dichlorbenzidin, 4,4'-Diaminodiphenylmethan (und Rohware),
Isomerengemische aus 2,4'-, 2,2'- und 4,4'-Diaminodiphenylmethan,
3,3',5,5'-Tetraisopropyl-4,4'-diaminodiphenylmethan, 2,2-Bis-(4-aminophenyl)-propan,
1,1-Bis-(4-aminophenyl)-cyclohexan, 4,4',4''-Triaminotriphenylmethan,
3,4'-Diamino-4-methyl-diphenylmethan und/oder dessen Isomeren oder
3,5,4'-Triamino-4-methyldiphenylmethan und/oder dessen Isomeren.

Selbstverständlich können beim erfindungsgemäßen Verfahren auch beliebige Gemische der beispielhaft genannten Di- und/oder Polyamine eingesetzt werden.

Die beispielhaft genannten Diaminodiphenylmethan-Isomeren können auch im Gemisch mit höherkernigen Homologen Verwendung finden, d. h. beispielsweise in Form der bekannten in Gegenwart von sauren Katalysatoren erhaltenen Anilin/Formaldehyd-Kondensate, die als »Polyamingemische der Diphenylmethanreihe« bezeichnet werden können.

Für das erfindungsgemäße Verfahren geeignete höhersiedende Alkohole b) sind beliebig organische Verbindungen, die eine aliphatisch, cycloaliphatisch oder araliphatisch gebundene, primäre oder sekundäre Hydroxylgruppe aufweisen, unter Normaldruck einen Siedepunkt von mindestens 190° C aufweisen, und die, von der Hydroxylgruppe abgesehen, unter den Bedingungen des erfindungsgemäßen Verfahrens inert sind. Gut geeignete höhersiedende Alkohole sind beispielsweise solche der Formel

$$R^2-OH$$

in welcher
$R^2$ die bereits genannte Bedeutung hat.

Bevorzugt werden solche Alkohole der genannten allgemeinen Formel eingesetzt, für welche $R^2$ für einen gesättigten, gegebenenfalls Etherbrücken aufweisenden primären aliphatischen Kohlenwasserstoffrest mit 8 bis 18 Kohlenstoffatomen steht.

Im übrigen wird stets ein solcher Alkohol der genannten Art eingesetzt, der bei Normaldruck einen mindestens 5°C, vorzugsweise mindestens 20°C oberhalb des Siedepunktes des abzuspaltenden Arylamins liegenden Siedepunkt aufweist. Geeignete Alkohole $R^2-OH$ weisen primäre oder sekundäre, vorzugsweise primäre Hydroxylgruppen auf.

Beispiele geeigneter Alkohole sind 1-Octanol, 1-Nonanol, 1-Decanol, 1-Undecanol, 1-Dodecanol, 1-Tetradecanol, 1-Hexadecanol, 1-Octadecanol, 2-Nonanol, Diethylenglykolmonoethylether, Benzylalkohol, 2,4,5-Trimethyl-cyclohexanol, 3-Methylbenzylalkohol, Cyclooctanol, 1,2,4-Trimethyl-cyclohexan-5-ol, oder 4-Methylbenzylalkohol. Beliebige Gemische derartiger Alkohole können selbstverständlich ebenfalls eingesetzt werden.

Für das erfindungsgemäße Verfahren geeignete N-Arylurethane c) sind insbesondere solche der Formel

$$R^3-NHCOO-R^4$$

für welche

$R^3$ für einen Phenyl- oder Tolyl, insbesondere Phenylrest steht und
$R^4$ für einen Rest steht, der bezüglich seiner Bedeutung der Definition von $R^2$ entspricht und vorzugsweise, jedoch nicht zwingend gleich $R^2$ ist.

Beim erfindungsgemäßen Verfahren werden somit Urethane c) wie z. B. N-Phenyl- (oder N-Tolyl-)-O-1-octyl-, -1-decyl-, -1-undecyl-, -1-dodecyl-, -1-tetradecyl-, -1-hexadecyl-, -1-octadecyl-, -2-nonyl-, -ethoxy-ethoxy-ethyl-, -2,4,5-trimethyl-cyclohexyl-, -3-methylbenzyl- oder -4-methylbenzyl-urethan eingesetzt. Der dem Urethan zugrundeliegende Alkohol weist primäre oder sekundäre, vorzugsweise primäre Hydroxylgruppen auf.

Beim erfindungsgemäßen Verfahren können also auch solche Urethane c) der genannten allgemeinen Formel eingesetzt werden, deren Rest $R^4$ sich von einem unter Normaldruck unterhalb 190°C siedenden Alkohol ableitet. Dies bedeutet insbesondere, daß beim erfindungsgemäßen Verfahren auch solche Urethane c) der genannten allgemeinen Formel eingesetzt werden können, für welcher $R^4$ für einen primären oder sekundären, vorzugsweise primären gesättigten aliphatischen Kohlenwasserstoff mit 1 bis 4 Kohlenstoffatomen steht. Im Falle der Verwendung derartiger Urethane c) findet bei der Durchführung des erfindungsgemäßen Verfahrens vor, während und/oder nach der Abspaltung des Arylamins $R^3-NH_2$ eine Verdrängung des niedrigsiedenden Alkohols $R^4-OH$ durch den hochsiedenden Alkohol $R^2-OH$ statt, so daß der niedrigsiedende Alkohol vor und/oder zusammen mit und/oder nach dem Arylamin aus dem Reaktionsgemisch abdestilliert. Im allgemeinen läuft diese Umurethanisierung schneller als die erfindungsgemäße Umsetzung statt, so daß diese Variante auf eine Herstellung in situ des Urethans c) auf Basis eines hochsiedenden Alkohols hinausläuft.

Die Urethane c) können grundsätzlich nach allen bekannten Verfahren des Standes der Technik hergestellt werden, beispielsweise durch die bekannte Umsetzung von Arylamin $R^3-NH_2$ mit Harnstoff und Alkohol $R^4-OH$.

Die beim erfindungsgemäßen Verfahren bevorzugt einzusetzenden Urethane c) auf Basis von Alkoholen $R^4-OH$ mit einem bei Normaldruck mindestens bei 190°C liegenden Siedepunkt können beispielsweise auch von der Durchführung des erfindungsgemäßen Verfahrens durch Umurethanisirung von bezüglich des N-Substituenten entsprechenden Urethanen auf Basis niedrigsiedender Alkohole der beispielhaft genannten Art hergestellt werden. Zu dieser Umurethanisierung genügt es, das letztgenannte Urethan beispielsweise zusammen mit einem 0,1- bis 5-molaren Überschuß eines Alkohols $R^2-OH$ auf ca. 130 bis 300°C zu erhitzen und den sich bildenden niedrigsiedenden Alkohol kontinuierlich durch Destillation zu entfernen. Die hierzu benötigten N-Arylurethane auf Basis niedrigsiedender Alkohole ihrerseits können nach den bekannten Methoden des Standes der Technik erhalten werden.

Bei der Durchführung des erfindungsgemäßen Verfahrens kommen die Reaktionspartner a), b) und c) in einem Molverhältnis von Alkohol b) zu Aminogruppen des Di- und/oder Polyamins a) von 1 : 1 bis 50 : 1, vorzugsweise 2 : 1 bis 15 : 1 bzw. einem Molverhältnis von Urethan c) zu Aminogruppen des Di- und/oder Polyamins a) von 1 : 1 bis 5 : 1, vorzugsweise 1,2 : 1 bis 2,5 : 1 entsprechenden Mengern zum Einsatz. Das Molverhältnis zwischen b) und c) liegt demzufolge im allgemeinen zwischen 1 : 1 und 10 : 1.

Bei der Durchführung des erfindungsgemäßen Verfahrens können auch Katalysatoren mitverwendet werden. Als die erfindungsgemäße Umsetzung beschleunigende Katalysatoren eignen sich beliebige Katalysatoren, die einen katalytischen Einfluß auf die Veresterung von Carbonsäuren ausüben, wie z. B. (i) unter den Reaktionsbedingungen inerte anorganische oder organische Basen, (ii) Lewis-Säuren oder (iii) Salze bzw. Komplexverbindungen, insbesondere Chelate von Übergangsmetallen.

Beispiele geeigneter Katalysatoren der Gruppe (i) sind tert.-Amine wie Triisopentylamin, Diethylbenzylamin, N,N-Dimethyl-benzylamin, Hexahydrodimethylanilin, N-Ethylpiperazin, Diethyl-(2-methoxypropyl)-amin, 2-(Diethylammoethyl)-phenylether, Oxethylmorpholin, N-(2-Diethylaminoethyl)-benzamid, N-(2-Diethylaminoethyl)-propionamid, 1,4-Diaza-(2,2,2)-bicyclooctan, N,N-Dimethyl-4-aminopyridin, 1-Azabicycloheptane, 1-Azabicyclooctane, gesättigte polyheterocyclische Amine, wie 3-Methylconidin, 1-Azabicyclo-(3,2,1)-octan, Pyrrolizidine und Chinuclidine, Alkoholate wie z. B. Natriummethylat, Natriumethylat, Kalium-t-butylat, Titantetrabutylat, Phenolate wie z. B. Natriumphenolat oder Titantetraphenolat, anorganische Basen wie Berylliumhydroxid und Natrium-, Kalium-, Lithium-, Magnesium-, Barium- oder Calciumhydroxid, basische Alkalisalze wie Natriumcarbonat, Natriumsulfid, Kaliumcarbonat oder Trinatriumphosphat sowie Alkalisalze von Fettsäuren oder Sulfonsäuren.

Geeignete Katalysatoren (ii) sind beispielsweise Lewis-Säuren wie Eisen(II)-chlorid, Eisen(III)-chlorid, Zinkchlorid, Zinn(II)-chlorid, Zinn(IV)-chlorid, Aluminiumchlorid, Zinkcyanid, Thalliumtrichlorid, Bortrifluorid oder Bortrifluoridetherat.

Geeignete Katalysatoren der Gruppe (iii) sind beispielsweise Salze von Übergangsmetallen, soweit sie nicht bereits in die Gruppe (ii) fallen, sowie Komplexverbindungen, insbesondere Chelate dieser Metalle wie Kobalt-, Mangan- oder Bleinaphthenate, Eisenoleate oder -carbonyle, Acetylacetonate von Eisen, Nickel, Kobalt, Zink, Blei, Aluminium, Mangan, Magnesium, Molybdän, Titan, Thorium, Zirkon oder Vanadium, Bis-(dibenzoylmethan)-kupfer, Bis-(ethylacetoacetat)-kupfer, -eisen, Koordinationsverbindungen von Titan, Zirkon, Hafnium, Thorium und Mangan mit $\beta$-Diketonen, $\beta$-Ketoestern und $\beta$-Hydroxyaldehyden, Dibutylzinndilaurat, Dibutylzinndiacetat, Di-(2-ethylhexyl)-zinnoxid, Dioctylzinnoxid, Zinnsalze von $C_1-C_{20}$-Carbonsäuren wie Zinn-(II)-naphthenat, -hexoat, -palmitat, -stearat oder -dimethylvalerat, Acetate, Chloride, Sulfate oder Octoate des zwei- oder dreiwertigen Cobalts, des ein- oder zweiwertigen Kupfers, des Zinks oder des zweiwertigen Bleis.

Besonders gut geeignete Katalysatoren sind beispielsweise Zinkchlorid, Zinkacetat, Zinkoctoat, Zinkoxid, Zinkcyanid, Dibutylzinnoxid, Dibutylzinndiethylat, Dimethylzinndichlorid, Zinn(II)-chlorid, Zinn(IV)-chlorid, Dibutylzinndilaurat, Kobalttriacetat, Kobalttrichlorid, Kobalttrioctoat, Kupfer(II)-acetat, Kupfer(I)-chlorid, Kupfer(II)-sulfat, Bleiacetat oder Bleichlorid.

Die Menge des jeweils eingesetzten Katalysators liegt im allgemeinen zwischen 1 ppm und 20 Gew.-%, bevorzugt zwischen 100 ppm und 5 Gew.-%, bezogen auf die Summe der Ausgangsmaterialien a), b) und c). Man wird in der Praxis selbstverständlich bestrebt bleiben, die Konzentration der Katalysatoren möglichst gering zu halten. Die optimale Konzentration hängt von der Art der Ausgangsmaterialien und der Aktivität des jeweiligen Katalysators ab und kann in einem einfachen Vorversuch bestimmt werden.

Im Falle der Herstellung von Di- und/oder Polyurethanen denen nicht durch Destillation zu reinigende Di- und/oder Polyisocyanate zugrundeliegen, werden diese erfindungsgemäß vorzugsweise ohne Mitverwendung von Katalysatoren hergestellt, um die Bildung von mit derartigen Katalysatoren verunreinigten Di- und/oder Polyisocyanaten aus den erfindungsgemäßen Verfahrensprodukten zu vermeiden. Die erfindungsgemäße Umsetzung wird im allgemeinen im Temperaturbereich von 180 bis 300° C, vorzugsweise 200 bis 250° C bei einem Druck von 0,1 bis 1500, vorzugsweise 10 bis 1000 mbar, insbesondere 200 bis 600 mbar, d. h. vorzugsweise bei Unterdruck durchgeführt. Der Druck wird vorteilhafterweise so eingestellt, daß ein Gemisch aus Arylamin $R^3-NH_2$ und Alkohol $R^2-OH$ sowie gegebenenfalls Alkohol $R^4-OH$, im Falle der Verwendung von Urethanen c) auf Basis hochsiedender Alkohole jedoch vorzugsweise reines Arylamin über eine wirksame Kolonne in eine Vorlage destilliert.

Die erfindungsgemäße Umsetzung ist im allgemeinen nach einer Reaktionszeit von 1 bis 20, vorzugsweise 2 bis 10 und insbesondere 3 bis 6 Stunden beendet. Vorzugsweise wird das erfindungsgemäße Verfahren dergestalt durchgeführt, daß man die Reaktionskomponenten b) und c) in den obengenannten Mengenverhältnissen vorlegt und die Reaktionskomponente a), gegebenenfalls gelöst in Alkohol $R^2-OH$, unter innigem Durchmischen in die Vorlage eindosiert. Die flüchtigen Bestandteile des Reaktionsgemisches bzw. die flüchtigen Folgeprodukte der erfindungsgemäßen Umsetzung, insbesondere das entstehende Arylamin werden kontinuierlich durch Destillation aus dem Reaktionsgemisch entfernt, so daß sich das Reaktionsgleichgewicht in Richtung auf das angestrebte Verfahrensprodukt verschiebt. Hierdurch wird ein quantitativer Umsatz des Di- und/oder Polyamins a) gewährleistet. Nach Beendigung der erfindungsgemäßen Umsetzung kann der im Überschuß vorliegende Alkohol b) durch Vakuumdestillation, vorzugsweise im Dünnschichtverdampfer vom Verfahrensprodukt entfernt werden.

Beim erfindungsgemäßen Verfahren entstehen als Verfahrensprodukte N-substituierte, niedermolekulare, d. h. im allgemeinen ein Molekulargewicht von unter 1500 aufweisende Urethane der Formel

$$R^1(-NHCOOR^2)_n$$

in welcher
n, $R^1$ und $R^2$ die obengenannte Bedeutung haben.

Im Falle der Verwendung von Urethanen c) auf Basis von hochsiedenden Alkoholen, die mit dem Alkohol $R^2-OH$ nicht identisch sind, entstehen beim erfindungsgemäßen Verfahren Di- und/oder

Polyurethane der zuletzt genannten allgemeinen Formel, in denen teilweise der Rest $R^2$ durch den von diesem Rest $R^2$ verschiedenen Rest $R^4$ ersetzt ist.

Das erfindungsgemäße Verfahren verläuft im Falle der Verwendung von Urethanen c), deren Alkoholkomponente dem Alkohol b) entspricht nach folgender Reaktionsgleichung:

$$R^1(NH_2)_n + n\,R^3{-}NHCOO{-}R^2 \xrightarrow{R^2{-}OH} R^1({-}NHCOOR^2)_n + n\,R^3{-}NH_2$$

Im Falle der Verwendung von Urethanen c) auf Basis von leicht flüchtigen Alkoholen $R^4{-}OH$ verläuft die erfindungsgemäße Umsetzung nach der nachstehenden Gleichung:

$$R^1(NH_2)_n + n\,R^3{-}NHCOO{-}R^4 + n\,R^2{-}OH \rightarrow R^1({-}NHCOOR^2)_n + n\,R^3{-}NH_2 + n\,R^4{-}OH$$

Es muß als überraschend bezeichnet werden, daß beim erfindungsgemäßen Verfahren die Bildung von unerwünschten Polyharnstoffen praktisch vollständig unterbleibt, obwohl die erfindungsgemäße Umsetzung bei einer Temperatur erfolgt, bei welcher normalerweise Urethane in die ihnen zugrundeliegenden Isocyanate und Alkohole gespalten werden, so daß damit gerechnet werden mußte, daß sich das neben der Aminkomponente a) vorliegende Isocyanat $R^1(NCO)_n$ mit dem Di- und/oder Polyamin zu unerwünschten Polyharnstoffen vereinigt. Diese unerwünschte Nebenreaktion wird jedoch praktisch nicht beobachtet.

Die erfindungsgemäßen Verfahrensprodukte können mit niedrig-siedenden Alkoholen mit einem bei Normaldruck unterhalb 140°C liegenden Siedepunkt, beispielsweise mit $C_1{-}C_4$-Alkanolen der Formel

$$R^5{-}OH$$

in welcher

$R^5$ für einen aliphatischen Kohlenwasserstoffrest mit 1 bis 4 Kohlenstoffatomen steht,

unter Druck bei 120 bis 300°C in Urethane der Formel

$$R^1({-}NHCOOR^5)_n$$

umurethanisiert werden. Hierzu wird der Alkohol $R^5{-}OH$ im allgemeinen in einer Menge von 5 bis 60, vorzugsweise 10 bis 20 Mol Alkohol pro Urethangruppe eingesetzt. Nach einer Reaktionszeit von 0,5 bis 10, vorzugsweise 1 bis 4 Stunden, dampft man den niedrigsiedenden Alkohol ab und destilliert anschließend bei 0,1 bis 5 mbar den freigesetzten hochsiedenden Alkohol aus dem Reaktionsgemisch ab. Diese Umurethanisierung ist im Detail beispielsweise in der Europäischen Patentanmeldung 80 106 250.6 beschrieben.

Die so erhaltenen Urethane der Formel

$$R^1({-}NHCOOR^5)_n$$

können dann in an sich bekannter Weise thermisch in organische Polyisocyanate der Formel

$$R^1(NCO)_n$$

und Alkohole der Formel

$$R^5{-}OH$$

gespalten werden.

Die in den nachfolgenden Beispielen gemachten Prozentangaben beziehen sich auf Gewichtsprozente.

## Beispiel 1

In einem 2-l-Vierhalskolben mit Rührer, beheizbarem Tropftrichter, Füllkörperkolonne und Innenthermometer werden 381,3 g (1,25 Mol) N-Phenyl-O-1-dodecylurethan in 370 g 1-Dodecanol vorgelegt und auf 240°C erhitzt. Bei einem Druck von 500 mbar tropft man innerhalb von einer Stunde unter Rühren 99 g (0,5 Mol) 4,4'-Di-aminodiphenylmethan zu, so daß spontan gebildetes Anilin über die Kolonne abdestilliert. Man rührt noch weitere 4 Stunden bei gleicher Temperatur unter weiterer destillativer Entfernung von Anilin, wobei das Vakuum bis auf 300 mbar gesteigert wird. Laut Hochdruckflüssigkeitschromatographie entstehen 301,7 g (97% d. Th.) 4,4'-Methylen-bis-(phenylcarbamidsäuredodecylester).

Beispiel 1a

(Vergleichsbeispiel unter Verwendung von Harnstoff als »Carbonyl-Quelle«)

Ein 2-l-Vierhalskolben wird mit Rührer, Innenthermometer, beheizbarem Tropftrichter und einem Rückflußkühler ausgerüstet. Vom Rückflußkühler führt eine Gasleitung in eine 1n HCl-Lösung. Man legt 150,2 g (2,5 Mol) Harnstoff und 744 g (4 Mol) n-Dodecanol vor und erhitzt unter Rühren auf 240° C. Unmittelbar nach Beginn einer heftigen Ammoniakentwicklung bei 145° C werden innerhalb von 2,5 Stunden 198,0 g (1 Mol) geschmolzenes 4,4'-Diamino-diphenylmethan zugetropft.

Man rührt noch weitere 2,5 Stunden bei 240° C, bis 4 Mol Ammoniak freigesetzt sind, und analysiert die trübe Schmelze mittels Hochdruckflüssigkeitschromatographie. Danach entstehen 365,8 g (59% der Theorie) 4,4'-Methylen-bis-(phenylcarbamidsäuredodecylester) und 80,4 g (20% der Theorie) an 4-(4-Aminobenzyl)-phenylcarbamidsäuredodecylester.

Beispiel 1b

(Vergleichsbeispiel unter Verwendung eines N-unsubstituierten Urethans als »Carbonyl-Quelle«)

Ein 2-l-Vierhalskolben wird mit Rührer, Innenthermometer, beheizbarem Tropftrichter, dampfbeheiztem Dephlegmator und Destillationsbrücke ausgerüstet. Man erhitzt ein Gemisch aus 178 g (2 Mol) Carbamidsäureethylester und 740 g Dodecanol langsam auf 240° C und destilliert das gebildete Ethanol ab. Wenn das Reaktionsgemisch eine Temperatur von 120° C erreicht hat, tropft man außerdem innerhalb von 1,3 Stunden 198 g (1 Mol) geschmolzenes 4,4'-Diaminodiphenylmethan zu und rührt noch 4 Stunden bei 240° C. Die durch Hochdruckflüssigkeitschromatographie ermittelte Ausbeute beträgt 382,1 g (61% der Theorie) 4,4'-Methylen-bis-(phenylcarbamidsäuredodecylester) und 87,8 g (21% der Theorie) 4-(4-Aminobenzyl)-phenylcarbamidsäuredodecylester. Im Rohprodukt befinden sich 49,6 g eines in heißem Aceton unlöslichen Feststoffs, der bei 215—300° C schmilzt und laut IR-Spektroskopie Harnstoffgruppen enthält.

Beispiel 2

In der unter Beispiel 1 beschriebenen Apparatur erhitzt man 762,5 g (2,5 Mol) N-Phenyl-O-dodecylurethan in 370 g Dodecanol unter Rühren auf 240° C. Bei 500 mbar tropft man 100 g eines handelsüblichen Gemisches aus 4,4'-, 2,4'-, 2,2'-Diamino-diphenylmethan und Polyphenylpolymethylen-polyaminen innerhalb von einer Stunde zu und rührt bei gleicher Temperatur 4 Stunden nach.

In dieser Zeit destilliert man 93,0 g (100% d. Th.) an Anilin ab. Das Rohprodukt enthält 295,5 g eines Gemisches aus 2,2'-, 2,4'- und 4,4'-Methylen-bis-(phenylcarbamidsäuredodecylester) und Polyphenylpolymethylen-polydodecylurethanen. (Die Analyse erfolgte durch Gelchromatographie).

Beispiel 3

In der unter Beispiel 1 beschriebenen Apparatur erhitzt man 762,5 g (2,5 Mol) N-Phenyl-O-dodecylurethan in 370 g Dodecanol auf 240° C. Innerhalb von einer Stunde läßt man 106 g (0,5 Mol) eines Gemisches von verschiedenen Diamino-methyl-diphenylmethan-Isomeren zutropfen und entfernt sich bildendes Anilin durch Destillation bei 500 mbar. Man rührt noch 5 Stunden bei 240° C und destilliert in dieser Zeit 93 g (100% d. Th.) Anilin ab. Nach Analyse durch Gelchromatographie sind 283,9 g (89% d. Th.) eines Isomerengemischs aus Methyl-diphenylmethan-bis-(carbamidsäuredodecylester) entstanden.

Beispiel 4

Man erhitzt, analog Beispiel 1, 762,5 g (2,5 Mol) N-Phenyl-O-dodecylurethan in 370 g Dodecanol auf 220° C und tropft im Verlauf von einer Stunde 61 g (0,5 Mol) 2,4-Diaminotoluol zu. Man rührt noch weitere $5^1/_2$ Stunden bei gleicher Temperatur und destilliert Anilin gleichzeitig unter vermindertem Druck (500—300 mbar) ab. Die Ausbeute beträgt laut Hochdruckflüssigkeitschromatographie 270,1 g (99% d. Th.) Toluol-2,4-bis-(carbamidsäuredodecylester).

Beispiel 5

In einem 2-l-Vierhalskolben mit Rührer, Kolonne und Innenthermometer werden 79 g (0,5 Mol) 1,5-Naphthylendiamin und 762,5 g (2,5 Mol) N-Phenyl-O-dodecylurethan in 370 g Dodecanol auf 220° C

erhitzt. Man legt ein Vakuum von 500 mbar an und destilliert das bei der Reaktion gebildete Anilin unmittelbar über die Kolonne ab. Nach einer Reaktionszeit von 5 Stunden entstehen 253,0 g (87% d. Th.) Naphthalin-1,5-bis-(carbamidsäuredodecylester). Die Ausbeute wurde durch Hochdruckflüssigkeitschromatographie ermittelt.

Beispiel 6

In der unter Beispiel 1 beschriebenen Apparatur werden 762,5 g (2,5 Mol) N-Phenyl-O-dodecylurethan in 370 g Dodecanol auf 240°C erhitzt und 58 g (0,5 Mol) Hexamethylendiamin innerhalb einer Stunde zugetropft. Man läßt noch 4 Stunden reagieren, wobei das bei der Reaktion gebildete Anilin durch Vakuumdestillation aus dem Reaktionsgemisch entfernt wird. Dabei entstehen laut Gelchromatographie 264,6 g (98% d. Th.) 1,6-Hexamethylen-bis-(carbamidsäuredodecylester).

Beispiel 7

Man erhitzt, wie in Beispiel 1 beschrieben, eine Lösung von 702,5 g (2,5 Mol) N-Phenyl-O-dodecylurethan in 270 g Dodecanol auf 240°C und tropft unter Rühren im Verlauf von $1^1/_2$ Stunden eine Lösung von 110 g (0,5 Mol) trans,trans-4,4'-Diamino-dicyclohexylmethan in 190 g Dodecanol zu. Man rührt noch 4 Stunden und destilliert in dieser Zeit unter Vakuum 93,0 g (100% d. Th.) an Anilin ab.

Die Ausbeute an Dicyclohexylmethan-trans,trans-4,4'-bis-(carbamidsäuredodecylester) beträgt laut Gelchromatographie 304,2 g (96% d. Th.).

Beispiel 8

Analog Beispiel 1 erhitzt man 305 g (1 Mol) N-Phenyl-O-dodecylurethan in 560 g Dodecanol auf 240°C und dosiert in einer Stunde 110 g (0,5 Mol) Isophorondiamin zu. Entstehendes Anilin wird bei einem Druck von 660—450 mbar abdestilliert. Nach vierstündigem Rühren bei 240°C ist die Reaktion beendet. Laut Gelchromatographie sind 291,3 g (98% d. Th.) 1-(Dodecoxycarbonylamino)-3,3,5-trimethyl-5-(dodecoxycarbonylamino-methyl)-cyclohexan entstanden.

Beispiel 9

a) Herstellung von N-Phenyl-O-1-dodecyl-urethan

In einem 6-l-Vierhalskolben, der mit Rührer, Innenthermometer und einem Rückflußkühler mit Gasableitung ausgerüstet ist, werden 400,4 g (4,3 Mol) Anilin, 258,3 g (4,3 Mol) Harnstoff und 2399,4 g (12,9 Mol) n-Dodecanol vorgelegt. Unter Rühren erhitzt man im Verlauf von $1^1/_2$ Stunden auf 240°C und rührt noch weitere 9 Stunden bei dieser Temperatur. Das frei werdende Ammoniak wird über die Kolonne auf eine Waschkolonne geleitet.

b) Erfindungsgemäßes Verfahren

In die gemäß a) erhaltene Lösung von N-Phenyl-O-1-dodecyl-urethan in überschüssigem n-Dodecanol werden innerhalb einer Stunde 336,6 g (1,7 Mol) 4,4'-Diaminodiphenylmethan bei 240°C unter innigem Durchmischen eingetropft. Das sich spontan bildende Anilin wird sofort kontinuierlich über eine Kolonne bei einem Druck von ca. 400—500 mbar abdestilliert. Anschließend wird das Dodecanol bei 0,1 mbar abdestilliert. Es werden so 1004,5 g (95% d. Th.) 4,4'-Methylen-bis-(phenylcarbamidsäuredodecylester) erhalten.

Beispiel 10

Nach der in Beispiel 1 beschriebenen Verfahrensweise werden 692,5 g (2,5 Mol) N-Phenyl-O-decylurethan in 320 g Decanol mit 99 g (0,5 Mol) 4,4'-Diaminodiphenylmethan zur Reaktion gebracht. Man destilliert innerhalb von 5 Stunden 93 g (100% d. Th.) Anilin ab und erhält 273,8 g (97% d. Th.) 4,4'-Methylen-bis-(carbamidsäuredecylester). (Die Analyse erfolgte über Hochdruckflüssigkeitschromatographie.)

Beispiel 11

In der in Beispiel 1 beschriebenen Apparatur erhitzt man 206,3 g (1,25 Mol) N-Phenyl-O-ethylurethan in 600 g n-Dodecanol unter Rühren auf 240°C. Man läßt nun innerhalb von 45 Minuten 99 g (0,5 Mol) 4,4'-Diaminodiphenylmethan zutropfen und hält das Reaktionsgemisch weitere 4,5 Stunden auf 240°C. Die bei der Reaktion gebildeten Nebenprodukte Ethanol und Anilin werden unmittelbar bei ihrem Entstehen durch Destillation entfernt. Zur kontinuierlichen Abtrennung der beiden Verbindungen wird im Verlauf der Reaktion ein Vakuum angelegt, das stetig gesteigert wird und gegen Ende der Reaktion 360 mbar beträgt. Das Rohprodukt enthält laut Hochdruckflüssigkeitschromatographie 292,0 g (94% d. Th.) Methylen-bis-(phenylcarbamidsäuredodecylester).

**Patentansprüche**

1. Verfahren zur Herstellung von Urethangruppen aufweisenden Verbindungen der allgemeinen Formel

$R^1(-NHCOOR^2)_n$

in welcher

$R^1$ für einen gesättigten, unsubstituierten aliphatischen Kohlenwasserstoffrest mit 4 bis 12 Kohlenstoffatomen, einen gesättigten, gegebenenfalls Alkyl-substituierten und/oder Methylenbrücken aufweisenden cycloaliphatischen Kohlenwasserstoffrest mit insgesamt 6 bis 25 Kohlenstoffatomen oder einen gegebenenfalls Alkyl-substituierten und/oder Methylenbrücken aufweisenden aromatischen Kohlenwasserstoffrest mit insgesamt 6 bis 25 Kohlenstoffatomen steht,
$R^2$ für einen gegebenenfalls inerte Substituenten und/oder Ethergruppen aufweisenden aliphatischen Kohlenwasserstoffrest mit insgesamt 6 bis 18 Kohlenstoffatomen, einen gegebenenfalls inerte Substituenten aufweisenden cycloaliphatischen Kohlenwasserstoffrest mit insgesamt 8 bis 15 Kohlenstoffatomen oder einen gegebenenfalls inerte Substituenten aufweisenden araliphatischen Kohlenwasserstoffrest mit insgesamt 7 bis 18 Kohlenstoffatomen steht, und
n für 2 oder 3 steht,

dadurch gekennzeichnet, daß man a) Di- und/oder Polyamine der Formel

$R^1(NH_2)_n$

in Gegenwart mindestens eines hochsiedenden Alkohols b) der Formel

$R^2-OH$,

der unter Normaldruck einen Siedepunkt von mindestens 190°C aufweist, mit c) N-Arylurethanen der Formel

$R^3-NHCOO-R^4$

bei erhöhter Temperatur zur Reaktion bringt und das sich spontan bildende, dem N-Arylurethan entsprechende Arylamin kontinuierlich durch Destillation aus dem Reaktionsgemisch entfernt, wobei

$R^3$ für einen Phenyl- oder Tolylrest steht und
$R^4$ für einen Rest steht, der bezüglich seiner Bedeutung der Definition von $R^2$ entspricht jedoch nicht zwingend gleich $R^2$ ist.

2. Verfahren gemäß Anspruch 1, dadurch gekennzeichnet, daß als hochsiedender Alkohol b) ein solcher verwendet wird, der der Alkoholkomponente des N-Arylurethans c) entspricht.

3. Verfahren gemäß Anspruch 2, dadurch gekennzeichnet, daß man das N-Arylurethan c), dessen Alkoholkomponente dem hochsiedenden Alkohol b) entspricht, in situ dadurch herstellt, daß man vor oder gleichzeitig mit der Einwirkung des Di- und/oder Polyamins a) ein N-Arylurethan c), dessen Alkoholkomponente einen niedrigeren Siedepunkt als der hochsiedende Alkohol b) aufweist, mit überschüssigen Mengen eines solchen Alkohols $R^2-OH$ bei erhöhter Temperatur zur Reaktion bringt und den sich hierbei spontan bildenden niedriger siedenden Alkohol durch Destillation aus dem Reaktionsgemisch entfernt.

4. Verfahren gemäß Anspruch 1 bis 3, dadurch gekennzeichnet, daß man die Umsetzung zwischen den Reaktionspartnern a), b) und c) innerhalb des Temperaturbereichs von 180 bis 300°C durchführt.

5. Verfahren gemäß Anspruch 1 bis 4, dadurch gekennzeichnet, daß man die Umsetzung zwischen a), b) und c) bei Unterdruck durchführt.

## Claims

1. Process for the preparation of compounds containing urethane groups, of the general formula

$R^1(-NHCOOR^2)_n$

in which

$R^1$ represents a saturated, unsubstituted aliphatic hydrocarbon radical with 4 to 12 carbon atoms, a saturated cycloaliphatic hydrocarbon radical which has a total of 6 to 25 carbon atoms and is optionally alkyl-substituted and/or contains methylene bridges, or an aromatic hydrocarbon radical which has a total of 6 to 25 carbon atoms and is optionally alkyl-substituted and/or contains methylene bridges,

$R^2$ represents an aliphatic hydrocarbon radical which has a total of 6 to 18 carbon and optionally contains inert substituents and/or ether groups, a cycloaliphatic hydrocarbon radical which has a total of 8 to 15 carbon atoms and optionally contains inert substituents or an araliphatic hydrocarbon radical which has a total of 7 to 18 carbon atoms and optionally contains inert substituents, and

n represents 2 or 3,

characterised in that a) di- and/or polyamines of the formula

$R^1(NH_2)_n$

are reacted, in the presence of at least one high-boiling alcohol b) of the formula

$R^2-OH$,

which has, under normal pressure, a boiling point of at least 190°C, with c) N-arylurethanes of the formula

$R^3-NHCOO-R^4$

at an elevated temperature, and the arylamine which forms spontaneously and corresponds to the N-arylurethane is removed from the reaction mixture continuously by distillation, wherein

$R^3$ represents a phenyl or tolyl radical and

$R^4$ represents a radical which, with regard to its meaning, corresponds to the definition of $R^2$, but is not necessarily the same as $R^2$.

2. Process according to Claim 1, characterised in that the high-boiling alcohol b) used is one which corresponds to the alcohol component of the N-arylurethane c).

3. Process according to Claim 2, characterised in that the N-arylurethane c), the alcohol component of which corresponds to the high-boiling alcohol b), is prepared in situ in such a manner that, before or during the action of the di- and/or polyamine a) an N-arylurethane c), the alcohol component of which has a lower boiling point than the high-boiling alcohol b), is reacted with excess quantities of such an alcohol $R^2-OH$ at an elevated temperature and the lower-boiling alcohol which is spontaneously formed in this reaction is removed from the reaction mixture by distillation.

4. Process according to Claim 1 to 3, characterised in that the reaction between the reactants a), b) and c) is carried out within a temperature range of 180 to 300°C.

5. Process according to Claim 1 to 4, characterised in that the reaction between a), b) and c) is carried out under reduced pressure.

## Revendications

1. Procédé de production de composés porteurs de groupes uréthanne de formule générale

$R^1(-NHCOOR^2)_n$

dans laquelle

$R^1$ est un reste d'hydrocarbure aliphatique saturé non substitué ayant 4 à 12 atomes de carbone, un reste d'hydrocarbure cycloaliphatique saturé présentant éventuellement des substituants alkyle et/ou des ponts méthylène, totalisant 6 à 25 atomes de carbone, ou un reste d'hydrocarbure aromatique présentant éventuellement des substituants alkyle et/ou des ponts méthylène, totalisant 6 à 25 atomes de carbone,

$R^2$ représente un reste d'hydrocarbure aliphatique présentant éventuellement des substituants inertes et/ou des groupes éther, avec au total 6 à 18 atomes de carbone, un reste d'hydrocarbure cycloaliphatique présentant éventuellement des substituants inertes, avec au total 8 à 15 atomes de carbone ou un reste d'hydrocarbure araliphatique présentant éventuellement des substituants inertes, avec au total 7 à 18 atomes de carbone et

n a la valeur 2 ou 3,

caractérisé en ce qu'on fait réagir a) des diamines et/ou des polyamines de formule

$$R^1(NH_2)_n$$

en présence d'au moins un alcool b) à haut point d'ébullition de formule

$$R^2-OH,$$

qui présente à la pression normale un point d'ébullition d'au moins 190°C, avec c) des N-aryluréthannes de formule

$$R^3-NHCOO-R^4$$

à température élevée et on élimine du mélange réactionnel en continu par distillation l'arylamine se formant spontanément et correspondant au N-aryluréthanne,

$R^3$ représentant un reste phényle ou tolyle et

$R^4$ représentant un reste qui correspond à la définition de $R^2$ du point de vue de sa définition, mais qui n'est pas forcément égal à $R^2$.

2. Procédé suivant la revendication 1, caractérisé en ce qu'on utilise comme alcool b) à haut point d'ébullition un alcool qui correspond au composant alcool du N-aryluréthanne c).

3. Procédé suivant la revendication 2, caractérisé en ce qu'on prépare in situ le N-aryluréthanne c) dont le composant alcool correspond à l'alcool b) à haut point d'ébullition en faisant réagir avant ou en même temps que l'action de la diamine et/ou de la polyamine a) un N-aryluréthanne c) dont le composant alcool présente un plus bas point d'ébullition que l'alcool b) à haut point d'ébullition, avec des quantités en excès d'un tel alcool $R^2-OH$ à température élevée et on élimine du mélange réactionnel par distillation l'alcool de plus bas point d'ébullition qui se forme alors spontanément.

4. Procédé suivant les revendications 1 à 3, caracterisé en ce qu'on conduit la réaction entre les partenaires réactionnels a), b) et c) dans l'intervalle de température de 180 à 300°C.

5. Procédé suivant les revendications 1 à 4, caractérisé en ce qu'on conduit la réaction entre a), b) et c) en dépression.